# EUROPEAN PATENT SPECIFICATION

(11) **EP 3 576 525 B1**
(45) Date of publication and mention of the grant of the patent: **02.03.2022**
(21) Application number: 18702427.8
(22) Date of filing: 17.01.2018
(51) Int. Cl.: A01M 7/00

(54) **SPRAYER BOOM SUSPENSION ASSEMBLY**
AUFHÄNGUNGSANORDNUNG FÜR SPRÜHAUSLEGER
ENSEMBLE SUSPENSION DE RAMPE DE PULVÉRISATEUR

(30) Priority: 03.02.2017 GB 201701778
(43) Date of publication of application: 11.12.2019
(73) Proprietor: AGCO International GmbH, 8212 Neuhausen am Rheinfall (CH)
(72) Inventor: HIDDEMA, Joris Jan, NL-5971 NG Grubbenvorst (NL)
(74) Representative: AGCO Intellectual Property Department
(86) International application number: PCT/EP2018/051133
(87) International publication number: WO 2018/141549

(56) References cited:
- EP-A1- 2 403 331
- CA-A1- 2 313 900
- US-A- 4 427 154
- US-A- 5 375 767
- US-A1- 2013 248 619

## Description

### Field of Invention

The invention relates to agricultural crop sprayers and particularly to the mounting of a transversely-extending sprayer boom to a chassis of a sprayer machine in a manner which permits raising and lowering of the boom, and also yaw, pitch and roll movement of the boom.

### Background

Agricultural sprayers are used by farmers and contractors to apply pesticides and other nutrient-containing solutions to crop fields. Sprayer machines can be mounted to, or towed by, a tractor or other suitable vehicle, or may be self-propelled with an integrated means of propulsion and a driver's cab. The sprayer machine typically includes a storage tank for the liquid to be applied, the tank being filled as required by the operator. However, it is also known to supply the liquid to the sprayer machine via a supply pipe connected to a remote bowser for example.

The liquid is applied to the field by a number of liquid application devices, commonly spray nozzles, which are mounted in a spaced relationship along the length of a deployable boom which, itself, is mounted to the chassis of the sprayer machine. The application devices are each connected to the storage tank by liquid delivery means comprising various pipes, valves, pumps and other plumbing. The liquid is atomised by the nozzles and applied to the crop in a jet of mist for example.

The sprayer boom is typically foldable into a transport position and ranges from 10 to 40 metres in length when deployed in the field. The boom is supported in a central region by a boom suspension assembly which mounts the boom to the machine chassis. Folding side boom assemblies are mounted to respective sides of the central region and extend transversely away therefrom when unfolded. This leaves a significant portion of the boom unsupported when fully extended and relies on only the rigidity of the boom structure to remain in position.

As the sprayer machine is driven across a crop field the extended boom experiences forces in several directions due to uneven ground and vehicle accelerations. In order to avoid undue stress being placed upon the boom suspension assembly it is known to suspend the boom in a manner that permits yaw, pitch and roll movements of the boom with respect to the chassis.

'Yaw' is pivoting movement of the boom around a central vertical axis. In other words, the left-hand side of the boom moves forwards whilst the right-hand side moves rearwards. Excessive yaw movement can result in uneven application of the spray to areas of the field. 'Pitch' is movement of the entire boom about a lateral or transverse axis and typically results from acceleration or deceleration of the vehicle. Excessive yaw movement can also result in uneven spray application. 'Roll' is movement of the boom around a longitudinal axis and typically results from the vehicle being driven over uneven terrain. Left uncontrolled, excessive roll can result in the extremities of the boom striking the ground thus risking damage to both the boom and the crop.

Oscillations in any direction can increase in amplitude to the extent where the machine must be stopped and restarted leading to inconvenience for the operator and an inefficient working approach.

To control the oscillations and movement of the boom extremities damping means are often provided to damp movement of the boom mounting assembly relative to the chassis. Springs may also be provided together with the dampers to bias the movements back to a neutral position. Attempts have been made to control the various oscillations in a boom resulting in rather complex suspension and damping systems. Although capable of controlling movements of the boom, known systems comprise many components adding to the overall weight and complexity of the assembly. EP-2,403,331 A1 discloses an example of a sprayer boom suspension assembly having a boom support frame suspended from a primary frame by a ball joint that allows the boom support frame to yaw pitch and roll with respect to the primary frame. Damping of pitch and yaw is controlled by a pair of dampers connected between the primary frame and the boom support frame.

### SUMMARY OF THE INVENTION

The solution to the technical problem is achieved by the subject-matter of independent claim 1, defining per se the invention. Particular embodiments of the invention are defined in the dependent claims.

By suspending the support frame directly from the lift arm assembly, and connecting the damping means between the support frame and the chassis, the need for an intermediate frame is avoided resulting in a significant cost and weight reduction. Furthermore, the oscillation-based stresses placed upon the lift arm assembly in conventional suspension assemblies are transferred to the chassis which is better placed to handle such and delivers a more robust geometry.

The damped swinging movements may be around one of more movement axes. The damping means serve predominantly to damp yaw and pitch oscillations of the support frame with respect to the chassis (and lift arm assembly), although a small degree of damping of roll movement may also be delivered.

Each of the first and second damping means preferably comprises a damping cylinder connected to the chassis so that one end of the cylinder is coupled in a fixed positional relationship to the chassis independent of the position of the lift arm assembly. By connecting the damping cylinders to the chassis on the forward side of the boom, the cylinders are protected to some extent from the applied chemicals which may be corrosive. The damping cylinders may be gas-charged cylinders or, alternatively, hydraulic cylinders.

In one embodiment each of the first and second damping means further comprises a bell crank pivotally mounted to the chassis, wherein the damping cylinder is connected between the chassis and a first arm of the bell crank, and a tie rod is connected between a second arm of the bell crank and the boom support frame. The bell crank permits the damping cylinders to be mounted with more of a vertical component which improves the effectiveness and performance of the cylinders.

The damping means preferably further comprises one or more springs or cushions secured to the chassis to act upon the bell crank and limit the extent of the yaw and pitch oscillations and bias the support frame back into a neutral position.

In a preferred arrangement the boom support frame is pendulously suspended from the lift arm assembly by a ball joint which permits yaw, pitch and roll movements around respective pivot axes that pass through the ball joint. Alternatively, the ball joint may be replaced with two or more articulating joints which permit at least yaw and pitch movement of the boom support frame.

In one embodiment the lift arm assembly comprises a lift arm pivotally mounted to the chassis for pivoting lifting and lowering movement about a transverse axis, wherein the boom support frame is pendulously suspended from the lift arm. The lift arm may be centrally located with respect to a transverse machine axis. Furthermore, a lift cylinder may be provided to act between the chassis and the lift arm to control the height of the boom support frame suspended therefrom.

Further damping means may be provided between the boom support frame and the lift arm assembly to control roll movements or oscillations.

The boom suspension assembly may be adapted for integration onto an agricultural crop sprayer which may be a tractor-mounted sprayer, a pull-type sprayer or a self-propelled sprayer by way of example.

### BRIEF DESCRIPTION OF THE DRAWINGS

Further advantages of the invention will become apparent from reading the following description of specific embodiments with reference to the appended drawings in which:-
Figure 1 show a front perspective view of a pull-type agricultural crop sprayer having a boom suspension assembly in accordance with an embodiment of the invention, shown with part of the tank cut away and without a boom;
Figure 2 shows a rear perspective view of the boom suspension assembly of Figure 1 in isolation;
Figure 3 shows a close up view of part of the boom suspension assembly of Figure 1;
Figure 4 shows another close up view of part of the boom suspension assembly of Figure 1;
Figures 5A and 5B show a side elevation of the boom suspension assembly of Figure 1, showing the lift arm in a raised position and a lowered position respectively;
Figures 6A and 6B show a rear elevation of the boom suspension assembly of Figure 1, showing the boom support frame in a roll-neutral position and a roll-offset position respectively; and,
Figures 7A and 7B show a view from above of the boom suspension assembly of Figure 1, showing the boom support frame in a yaw-neutral position and a yaw-offset position respectively.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the particular realisations of the invention are not limited to these preferred embodiments. But to the contrary, the invention is defined by the subject-matter of independent claim 1, whereas some particular embodiments of the invention are defined in the dependent claims.

Reference to terms such as longitudinal, transverse and vertical are made with respect to a longitudinal vehicle axis which is parallel to a normal forward direction of travel.

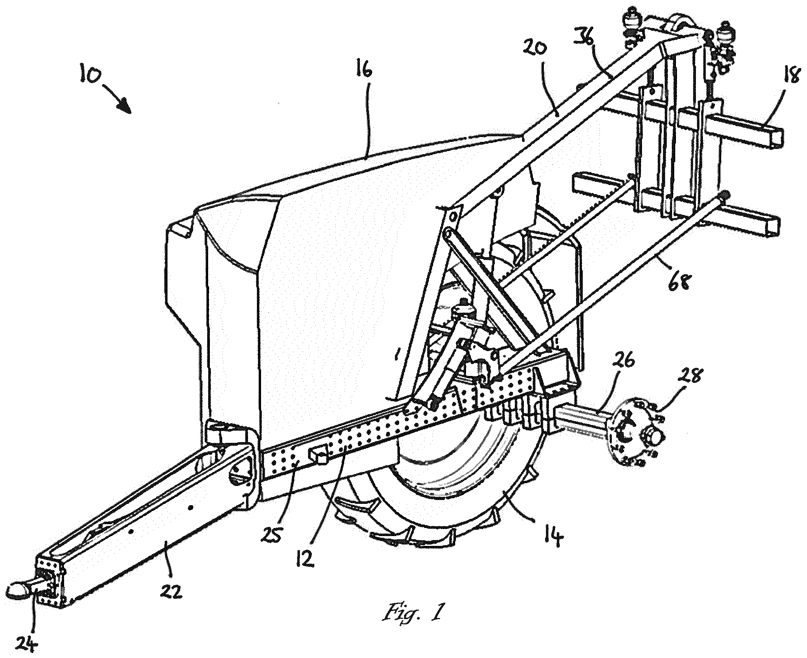

With reference to Figure 1 a pull-type, or trailed, sprayer 10 comprises a chassis 12, ground engaging wheels 14, a storage tank 16 and a boom support frame 18 suspended from a lift arm assembly 20. It should be appreciated that the storage tank 16 is cut away in Figure 1, and the left-hand wheel omitted from view to reveal details of the sprayer boom assembly.

The pull-type sprayer 10 is configured to be attached to the rear of an agricultural tractor by means of a hitch tongue 22 and drawbar attachment device 24 secured to the front end of chassis 12. The sprayer 10 is suitable for use by farmers to apply pesticide and other nutrient-containing solutions to agricultural crop fields.

The chassis 12 comprises a central, rigid longitudinally-extending frame member 25 which supports the weight of the tank 16 and the sprayer boom suspension assembly 18,20. The frame member 25 is centrally aligned with respect to the centre of mass of the sprayer 10 so that a substantially equal weight resides to the left and right sides of the frame member 25.

Although shown and described as having a single longitudinal member 25, the chassis 12 may, in alternative configurations, comprise further weight-bearing components without deviating from the scope of the invention.

A single, transversely-extending, axle 26 is shown mounted to the underside of frame member 25, the axle 26 including outboard wheel hubs 28 for carrying the wheels 14. In alternative embodiments further wheeled axles may be provided.

The storage tank 16 serves to hold the liquid to be applied to the crop field. For example, the liquid may be a pesticide formulation or a nutrient-containing solution. The storage tank may be moulded from plastic and is preferably shaped so as to surround the lift arm assembly 20 without inhibiting the operation thereof. The storage tank may also comprise a plurality of separate storage tanks or integrated compartments which serve to carry an on-board supply of clean water for rising the main chemical tank after use.

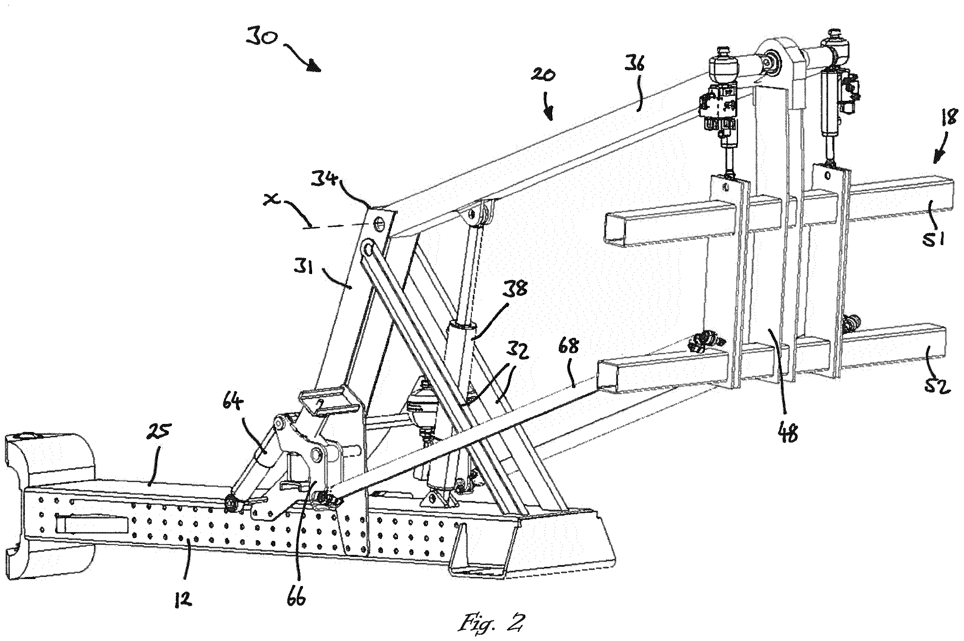

Turing to attention to Figure 2 a sprayer boom suspension assembly 30 in accordance with a first embodiment of the invention comprises the chassis 12, the lift arm assembly 20 and the boom support frame 18. Figure 2 shows the sprayer boom suspension assembly 30 in isolation to assist with a clear description of the component parts to follow below.

The lift arm assembly 20 comprises a triangulated support structure having a rearwardly-leaning post 31 secured to the frame member 25 and a pair of transversely-spaced stabilizing members 32 to triangulate between the post 31 and frame member 25. The support structure 31,32 is fixed to the chassis 12 and provides an elevated mounting point 34 for a lift arm 36. Although treated as a fixed component of the lift arm assembly 20, the support structure 31,32 may be considered as forming part of the chassis 12.

Lift arm 36 is pivotally mounted to post 31 in a manner which allows pivoting lifting and lowering movement about a transverse lift axis 'x'. Lift arm 36 is raised and lowered by means of a lift cylinder 38 which is pivotally connected at each end between the frame member 25 and a bracket provided on the underside of lift arm 36.

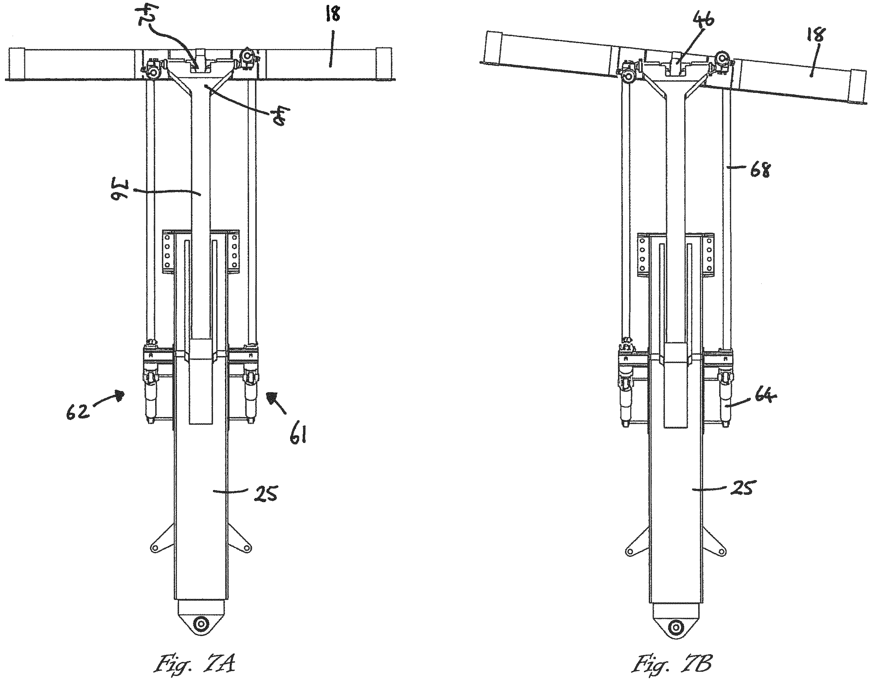

Lift arm 36 extends rearwardly from the pivot axis x and terminates at its rearmost-end with a Y-shaped portion 40 as best seen from above in Figure 7a. The Y-shaped portion 40 comprises a pair of flared-out portions 41 separated by a void 42 which accommodates a transverse pin 44 (secured between the flared portions 41) and a ball joint 46.

The boom support frame 18 is pendulously suspended from the lift arm assembly 20 by the ball joint 46 which is mounted upon transverse pin 44. The ball joint 46 is received inside a bore formed in an upright central member 48 which forms a central spine of the boom support frame 18. The upright 48 may include a cast top portion 49 in which the ball joint-receiving bore is machined. The boom support frame 18 as best seen in Figure 2 also includes pair of vertically-spaced transverse tubular members 51,52 which are secured to the upright member 48.

It should be recognised that the boom support frame 18 may be constructed in a host of different ways and need not necessarily, for example, include a pair of transverse tubes or a lattice-type structure as described above. The boom support frame 18 preferably serves to carry and support a folding multi-section sprayer boom which, in one embodiment, includes a central boom section fixed with respect to frame 18 and multi section wings which are pivotally mounted to outboard ends of frame 18. However, it should be understood that the invention relates to the manner in which the boom and boom support frame 18 is mounted to the chassis 12 and further details of the boom and boom support frame construction are not pertinent to the understanding of the invention.

The ball joint 46 permits the boom support frame 18 to pitch about a transverse axis, to yaw about a vertical axis, and to roll about a longitudinal axis, the respective axes passing through the ball joint 46. In accordance with an aspect of the invention spring and damping apparatus are provided to control pitch yaw and roll movement of the boom support frame 18 and, ultimately, the boom mounted thereto (not shown).

Pitch and yaw movement of the boom support frame 18 is controlled by first and second damper assemblies, designated 61 and 62 indicated in Figure 7a. First damping assembly 61 is positioned on the left-hand side of chassis 12 whilst the second damper assembly is positioned on the right-hand of chassis 12. Each of the first and second damper assemblies 61,62 are similar in construction and the following description of first damper assembly 61 applies also to the second damper assembly 62.

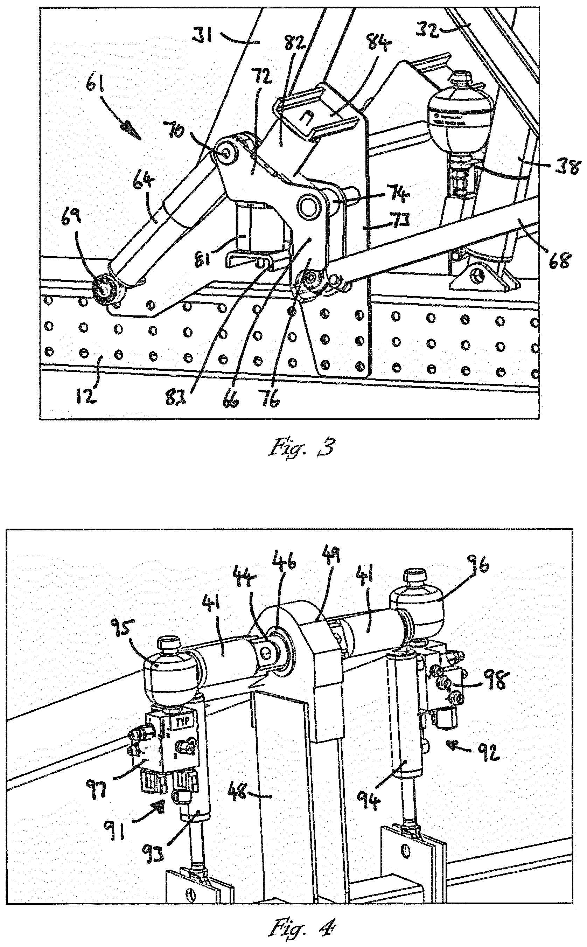

With reference to Figures 2 and 4, damper assembly 61 includes a damping cylinder 64, a bell crank 66 and a tie rod 68. The cylinder 64 is connected at one end 69 to an anchor point provided by chassis 12 and pivotally connected at the other end 70 to a forwardly-extending leg 72 of bell crank 66.

The bell crank 66 is pivotally mounted to an upright plate 73 which itself is secured to frame member 25 and forms part of chassis 12. The pivoting joint 74 defines a pivot axis around which bell crank 66 can pivot, the pivot axis extending generally transversely.

A second leg 76 of the bell crank 66 has connected thereto the tie rod 68 which extends therefrom in a generally rearward direction and is coupled to the boom support frame 18 at position that is laterally spaced away central upright member 48.

The construction of bell crank 66 is shown as comprising a pair of parallel spaced plates which provide a channel therebetween to receive the respective ends of damper 64 and tie rod 68. However, it should be appreciated that the bell crank 66 may take other constructions and may, for example, be a solid cast member with machined portions to make the necessary couplings.

In a not illustrated embodiment the damping assemblies omit the bell crank. In such an arrangement a damping cylinder may be integrated with, or coupled to the tie rod 68 that extends from the boom support frame 18 to the chassis 12.

Turning back to the illustrated embodiment, pitch and yaw movement of the boom and boom support frame 18 is transferred via the tie rod 68 and bell crank 66 to the damping cylinder 64. Such movement is restricted by the provision of springs in the form of a pair of rubber cushions 81,82 which are each secured to a respective mounting plate 83,84 which protrude outwardly from upright plate 73. The cushions 81,82 abut opposing sides of the first bell crank leg 72. When displaced away from the neutral position shown in Figure 3 the cushions 81,82 flex to absorb the movement and serve to bias the bell crank 66, and ultimately the boom support frame 18, back in to the neutral position.

The cushions 81,82 serve as springs to bias the boom support frame 18 into the neutral position when displaced therefrom. It should be appreciated that the rubber cushions 81,82 may be replaced with other types of spring without deviating from the scope of the invention. Moreover, the springs may act upon other parts of the suspension assembly to counteract yaw and pitch movements. For example, a pair of springs may act directly upon the boom support frame 18.

Roll movement of the boom support frame 18 is controlled by spring-damper devices 91,92 which are best seen in Figure 4 and are each connected between the flared portions 41 and the boom support frame 18 at positions laterally spaced from the upright member 48. The spring-damper devices 91,92 include respective hydraulic cylinders 93,94 each having an accumulator 95,96 connected thereto to provide the spring/damper function. Each device 91,92 also includes a respective valve block 97,98 connected to hydraulic control apparatus (not shown) for control of the cylinders 93,94 in a manual or automatic levelling function. In other words, the devices 91,92 also permit control of the roll angle of the boom support frame 18 with respect to the chassis 12.

The direct suspension of the boom support frame 18 from the lift arm assembly 20, and the direct connection of the damping means between the boom support frame 18 and chassis 12 delivers a lightweight yet robust sprayer boom suspension assembly without the need for an intermediate sub-frame.

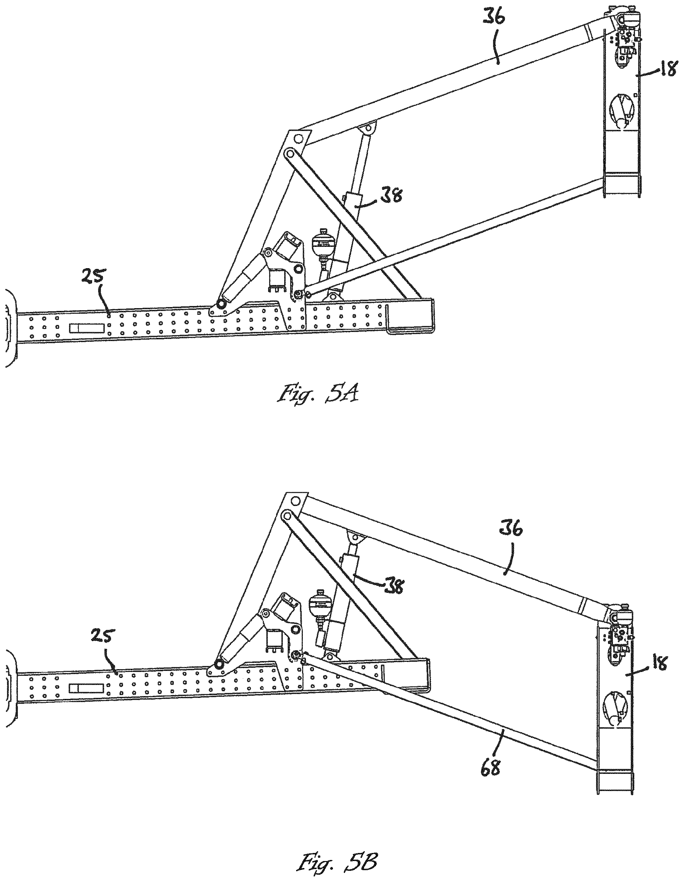

With reference to the Figures 5a and 5b, the lift arm 36 and tie rod 68 provide a four-bar linkage arrangement which keeps the boom support frame 18 substantially upright throughout the range of movement provided by the lift arm assembly 20. Figure 5a shows the boom support frame 18 in a fully raised position whilst Figure 5b shows the boom support frame 18 in a fully lowered position wherein the boom support frame 18 is maintained substantially upright throughout. The tie rods 68 pivot at both ends so that there is no force transmitted to the respective bell cranks 66 as the boom support frame 18 is raised and lowered.

It should be appreciated that the side view provided in Figures 5a and 5b hides the right-hand tie rod 68. Furthermore, the boom support frame 18 is shown covered by a protective shell which is omitted in Figures 1,2 and 4.

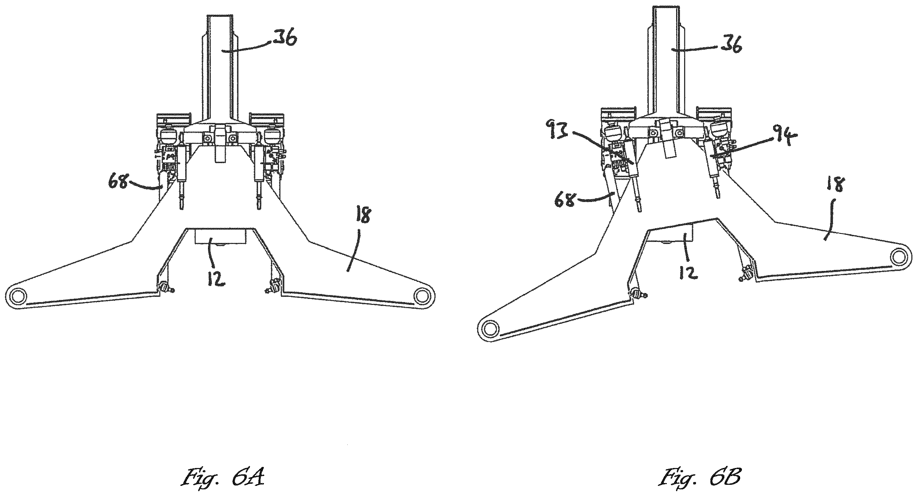

Figures 6a and 6b illustrate roll movement of the (covered) boom support frame 18 wherein Figure 6a shows a neutral position and Figure 6b shows roll displacement anti-clockwise round a longitudinal roll axis. The tyre rod 68 are pivotally coupled at each end which permits the first and second damping assemblies 61,62 to cater for the roll movement. At the same time the spring damper devices 91,92 serve to control and damp the roll movement. As can be seen in Figure 6b the hydraulic cylinders 93,94 are extended with different lengths as the roll displacement occurs.

Figures 7a and 7b show a view of the boom suspension assembly 30 from above and illustrate yaw movement of the boom support frame 18 around a vertical axis passing through ball joint 46. Together the figures show that the first and second damping assembly 61,62 can cater for the yaw or twisting movement of the boom with compressive forces on one tie rod 68 at the same time as tensile forces are exerted via the opposite tie rod.

In summary, there is provided a boom suspension assembly for an agricultural sprayer comprising a chassis, a lift arm assembly mounted to the chassis, and a boom support frame pendulously suspended from the lift arm assembly. Spring and damping means are provided between the chassis and the boom support frame to control pitch and yaw movement of the boom support frame away from a neutral position. The lift arm assembly, boom support frame and the damping means provide a four-bar linkage which maintains the boom support frame in a steady alignment when raised and lowered.

## Claims

1. A sprayer boom suspension assembly (30) comprising a chassis (12), a lift arm assembly (20) mounted to the chassis (12), a boom support frame (18) pendulously suspended from the lift arm assembly (20) to permit yaw, pitch and roll movements of the boom support frame (18) with respect to the chassis (12), and first and second damper means (61,62) each connected at one end to the boom support frame (18) in a laterally spaced-apart relationship with respect to a normal forward direction of travel of the chassis (12), wherein the damping means are configured to damp swinging movement of the boom support frame (18) relative to the lift arm assembly (20), **characterised in that** the first and second damper means (61,62) are each directly connected at an opposite end to the chassis (12).

2. A sprayer boom suspension assembly according to Claim 1, wherein each of the first and second damping means (61,62) comprises a damping cylinder (64) connected to the chassis (12).

3. A sprayer boom suspension assembly (30) according to Claim 2, wherein each of the first and second damping means (61,62) further comprises a bell crank (66) pivotally mounted to the chassis (12), wherein the damping cylinder (64) is connected between the chassis (12) and a first arm (72) of the bell crank (66), and a tie rod (68) is connected between a second arm (76) of the bell crank (66) and the boom support frame (18).

4. A sprayer boom suspension assembly (30) according to Claim 3, wherein each of the first and second damping means (61,62) further comprises a spring or cushion (81,82) secured to the chassis (12) and which acts upon the bell crank (66).

5. A sprayer boom suspension assembly (30) according to any preceding claim, wherein the boom support frame (18) is pendulously suspended from the lift arm assembly (20) by a ball joint (46).

6. A sprayer boom suspension assembly (30) according to any preceding claim, wherein the lift arm assembly (20) comprises a lift arm (36) pivotally mounted with respect to the chassis (12) for pivoting lifting and lowering movement about a transverse lift axis (x) with respect to the normal forward direction of travel of the chassis (12), and wherein the boom support frame (18) is pendulously suspended from the lift arm (36).

7. A sprayer boom suspension assembly (30) according to Claim 6, wherein the lift arm assembly (20) further comprises a lift cylinder (38) configured to act between the chassis (12) and the lift arm (36).

8. An agricultural sprayer machine (10) comprising a sprayer boom suspension assembly (30) according to any preceding claim, and a foldable sprayer boom assembly mounted to the boom support frame (18).

9. An agricultural sprayer machine (10) according to Claim 8, comprising a pair of ground-engaging wheels (14) mounted to the chassis (12), wherein the first and second damping means (61,62) extend from the chassis (12) to the boom support frame (18) in a space between the wheels (14), at least when the lift arm assembly (20) is in a lowered position.

## Patentansprüche

1. Sprüharmlagerungsanordnung (30), mit einem Chassis (12), einer an dem Chassis (12) montierten Liftarmanordnung (20), einem Balkenlagerrahmen (18), der von der Liftarmanordnung (20) pendelnd gelagert ist, um schwenkende, stampfende und rollende Bewegungen des Balkenlagerrahmens (18) relativ zu dem Chassis (12) zu gestatten, und ersten und zweiten Dämpfungsmitteln (61, 62), die jeweils an einem Ende in einer seitlich beabstandeten Beziehung relativ zu einer normalen Vorwärtsfahrtrichtung des Chassis (12) mit dem Balkenlagerrahmen (18) verbunden sind, wobei die Dämpfungsmittel konfiguriert sind, um eine schwingende Bewegung des Balkenlagerrahmens (18) relativ zu der Liftarmanordnung (20) zu dämpfen, **dadurch gekennzeichnet, dass** die ersten und zweiten Dämpfungsmittel (61, 62) jeweils direkt an einem gegenüberliegenden Ende des Chassis (12) befestigt sind.

2. Sprüharmlagerungsanordnung nach Anspruch 1, wobei das erste und das zweite Dämpfungsmittel (61, 62) jeweils einen Dämpfungszylinder (64) aufweist, der mit dem Chassis (12) verbunden ist.

3. Sprüharmlagerungsanordnung (30) nach Anspruch 2, wobei das erste und das zweite Dämpfungsmittel (61, 62) jeweils weiterhin einen Kipphebel (66) aufweist, der schwenkbar an dem Chassis (12) montiert ist, wobei der Dämpfungszylinder (64) zwischen dem Chassis (12) und einem ersten Arm (72) des Kipphebels (66) befestigt ist, und wobei ein Zuganker (68) zwischen einem zweiten Arm (76) des Kipphebels (66) und dem Balkenlagerrahmen (18) befestigt ist.

4. Sprüharmlagerungsanordnung (30) nach Anspruch 3, wobei das erste und das zweite Dämpfungsmittel (61, 20) jeweils weiterhin eine Feder oder einen Puffer (81, 82) aufweist, die/der mit dem Chassis (12) verbunden ist und auf den Kipphebel (66) einwirkt.

5. Sprüharmlagerungsanordnung (30) nach mindestens einem der vorhergehenden Ansprüche, wobei der Balkenlagerrahmen (18) durch ein Kugelgelenk (46) von der Liftarmanordnung (20) pendelnd gelagert ist.

6. Sprüharmlagerungsanordnung (30) nach mindestens einem der vorhergehenden Ansprüche, wobei die Liftarmanordnung (20) einen Liftarm (36) aufweist, der für eine verschwenkende anhebende und absenkende Bewegung um eine quer verlaufende Liftachse (x) relativ zu der normalen Vorwärtsfahrtrichtung des Chassis (12) relativ zu dem Chassis (12) schwenkbar montiert ist, und wobei der Balkenlagerrahmen (18) von dem Liftarm (36) pendelnd gelagert ist.

7. Sprüharmlagerungsanordnung (30) nach Anspruch 6, wobei die Liftarmanordnung (20) weiterhin einen Liftzylinder (38) aufweist, der konfiguriert ist, um zwischen dem Chassis (12) und dem Liftarm (36) zu wirken.

8. Landwirtschaftliche Sprühmaschine (10), mit einer Sprüharmlagerungsanordnung (30) nach mindestens einem der vorhergehenden Ansprüche und einer faltbaren Sprühbalkenanordnung, die an dem Balkenlagerrahmen (18) montiert ist.

9. Landwirtschaftliche Sprühmaschine (10) nach Anspruch 8, mit einem Paar den Boden kontaktierenden Rädern (14), die an dem Chassis (12) montiert sind, wobei sich die ersten und zweiten Dämpfungsmittel (61, 62) von dem Chassis (12) in einem Raum zwischen den Rädern (14) zu dem Balkenlagerrahmen (18) erstrecken, zumindest dann, wenn sich die Liftarmanordnung (20) in einer abgesenkten Stellung befindet.

## Revendications

1. Ensemble de suspension de flèche de pulvérisateur (30) comprenant un châssis (12), un ensemble de bras de levage (20) monté sur le châssis (12), un bâti de support de flèche (18) suspendu de manière pendulaire à partir de l'ensemble de bras de levage (20) de manière à permettre des mouvements de lacet, de tangage et de roulis du bâti de support de flèche (18) par rapport au châssis (12), et des premier et second moyens d'amortissement (61, 62) chacun étant relié, au niveau d'une première extrémité, au bâti de support de flèche (18) en relation latéralement espacée par rapport à une direction de déplacement normale vers l'avant du châssis (12), dans lequel les moyens d'amortissement sont configurés de manière à amortir un mouvement d'oscillation du bâti de support de flèche (18) par rapport à l'ensemble de bras de levage (20), **caractérisé en ce que** les premier et second moyens d'amortissement (61, 62) sont reliés chacun directement, au niveau d'une extrémité opposée, au châssis (12).

2. Ensemble de suspension de flèche de pulvérisateur selon la revendication 1, dans lequel chacun des premier et second moyens d'amortissement (61, 62) comprend un vérin d'amortissement (64) relié au châssis (12).

3. Ensemble de suspension de flèche de pulvérisateur (30) selon la revendication 2, dans lequel chacun des premier et second moyens d'amortissement (61, 62) comprend, en outre, un levier coudé (66) monté de manière à pouvoir pivoter par rapport au châssis (12), dans lequel le vérin d'amortissement (64) est relié entre le châssis (12) et un premier bras (72) du levier coudé (66), et un tirant (68) est relié entre un second bras (76) du levier coudé (66) et le bâti de support de flèche (18).

4. Ensemble de suspension de flèche de pulvérisateur (30) selon la revendication 3, dans lequel chacun des premier et second moyens d'amortissement (61, 62) comprend, en outre, un ressort ou un coussin (81, 82) fixé sur le châssis (12) et qui agit sur le levier coudé (66).

5. Ensemble de suspension de flèche de pulvérisateur (30) selon l'une quelconque des revendications précédentes, dans lequel le bâti de support de flèche (18) est suspendu de manière pendulaire à partir de l'ensemble de bras de levage (20) par un joint à rotule (46).

6. Ensemble de suspension de flèche de pulvérisateur (30) selon l'une quelconque des revendications précédentes, dans lequel l'ensemble de bras de levage (20) comprend un bras de levage (36) monté de manière à pouvoir pivoter par rapport au châssis (12) afin d'assurer un mouvement de montée et descente pivotant autour d'un axe de levage transversal (x) par rapport à une direction de déplacement normale vers l'avant du châssis (12), et dans lequel le bâti de support de flèche (18) est suspendu de manière pendulaire à partir du bras de levage (36).

7. Ensemble de suspension de flèche de pulvérisateur (30) selon la revendication 6, dans lequel l'ensemble de bras de levage (20) comprend, en outre, un vérin de levage (38) configuré de manière à agir entre le châssis (12) et le bras de levage (36).

8. Machine de pulvérisation agricole (10) comprenant un ensemble de suspension de flèche de pulvérisateur (30) selon l'une quelconque des revendications précédentes, et un ensemble de flèche de pulvérisateur pliable monté sur le bâti de support de flèche (18).

9. Machine de pulvérisation agricole (10) selon la revendication 8, comprenant une paire de roues de couplage au sol (14) montées sur le châssis (12), dans laquelle les premier et second moyens d'amortissement (61, 62) s'étendent à partir du châssis (12) vers le bâti de support de flèche (18) dans un espace entre les roues (14), au moins lorsque l'ensemble de bras de levage (20) est dans une position abaissée.
